# EUROPEAN PATENT APPLICATION

(11) **EP 1 300 193 A1**
(43) Date of publication of application: **09.04.2003**
(21) Application number: 02022261.8
(22) Date of filing: 04.10.2002
(51) Int. Cl.: B01J 35/04, F01N 3/035, B01D 53/94

(54) **Method and device for the catalytic conversion of gaseous pollutants in the exhaust gas of combustion engines**

(30) Priority: 06.10.2001 EP 01123935
(71) Applicant: OMG AG & Co. KG, 63457 Hanau-Wolfgang (DE)
(72) Inventor: Pfeifer, Markus, Dr., 42719 Solingen (DE); Van Setten, Barry, Dr., 63517 Rodenbach (DE); Staab, Roger, 63579 Freigericht (DE); Lox, Egbert, Dr., 36355 Grebenhain (DE); Böhnke, Harald, Dr., 64285 Darmstadt (DE); Lösche, Bernd, 63571 Gelnhausen (DE); Gieshoff, Jürgen, Dr., 63599 Biebergemünd (DE); Kreuzer, Thomas, Dr., 61184 Karben (DE)
(74) Representative: VOSSIUS & PARTNER

(57) **Abstract**

The present invention is directed to a method and a device for the catalytic conversion of harmful substances contained in the exhaust gas of combustion engines, wherein the exhaust gas is forced to pass through a catalyst-carrying porous support. The support may be comprised of a catalytic material support itself, have a catalytic material coating its pores and/or have a catalytic layer on one or both of the surfaces through which the exhaust gas will travel.

## Description

### Field of the Invention

The present invention relates to the field of catalytic conversion of gaseous pollutants.

### Background of the Invention

Combustion engines can be, on the one hand, part of stationary combustion plants or, on the other hand, used in mobile vehicles. Unfortunately, both types of engines produce gases that contain harmful substances that pollute the environment considerably. These harmful substances or pollutants typically comprise carbon monoxide (CO), hydrocarbons (HC) and nitrogen oxides (NOₓ).

Over the years, governments around the world have reduced the allowable limits for emission of these pollutants. In order to comply with these requirements, persons skilled in the art have tried to optimize the combustion processes in combustion engines, especially in diesel and gasoline engines. These optimization techniques have reduced the emission of harmful substances considerably. However, known optimization processes are not sufficient to comply with the current legal limits.

Consequently, in order to lower further the amount of pollutants emitted with exhaust gases, catalysts that convert the pollutants into harmless compounds such as water, carbon dioxide and nitrogen have been employed.

By way of example, it is known to use three-way catalysts. These types of catalysts simultaneously convert nitrogen oxides, hydrocarbons and carbon monoxide into less noxious substances.

It is also known to use SCR catalysts, which are especially used for the treatment of the exhaust gas of combustion engines in stationary combustion plants. The acronym SCR stands for "selective catalytic reduction," which means that nitrogen oxides contained in the exhaust gas are chemically reduced to nitrogen and water even in the presence of oxygen, by adding ammonia to the exhaust gas and contacting the mixture of nitrogen oxides, ammonia and the other exhaust gas components with the SCR-catalyst.

These types of catalysts are typically applied as layers, referred to as "wash coat layers," onto the surfaces of solid supports. The solid supports may, for example, be in the form of pellets or tablets consisting of, for example, alumina.

Known catalyst support systems may, for example, be designed in the form of flow-through substrates. Flow-through substrates typically have honeycomb structures with a plurality of flow channels through which the exhaust gas may flow, extending from an inlet to an outlet and are made of metal or ceramic. In these structures, a catalytic coating may be applied to the inner surfaces of the flow channels.

Alternatively, flow-through substrates can be made entirely from one or more catalytically active materials. For this purpose, the one ore more catalytic materials are mixed with additional components such as pore-formers, plasticising materials, *etc.* and then formed into the desired honeycomb shape by extrusion.

In flow-through substrates, the exhaust gas flows along the flow channels. For catalytically converting the pollutants contained in the exhaust gas, the exhaust gas components must leave the main flow direction of the exhaust gas stream and diffuse into the catalytic coating or into the bulk catalytic material and contact the catalytically active centers of the catalyst material.

Thus, before the gaseous pollutants can react at the catalytic centers, they need to be transported by diffusion into the catalyst material. Further, after catalytic conversion, the reaction products need to diffuse out of the catalyst material and to rejoin the exhaust gas stream in the flow channel.

Diffusion of the gaseous pollutants only takes place when the energy of the pollutants is larger than a certain activation energy. Thus, depending on the temperature of the exhaust gas and the catalyst, the conversion of the gaseous pollutants may be limited by the transport mechanisms of these substances, *i.e.,* it is not the reaction speed at the catalytic centers but the transport of the pollutants to the catalytic centers that determines the velocity of the catalytic conversion of the pollutants. This means, in cases of unfavorable reaction conditions, there are a considerable number of catalytic centers that are not reached by the pollutants. Consequently, the highest possible chemical conversion of harmful substances at the catalytic centers is not achieved.

Thus, there remains a need to improve the flow of reactants to and the flow of chemical products away from catalytic materials. The present invention provides one solution.

### Summary of the Invention

The present invention is directed to the catalytic conversion of gaseous pollutants in the exhaust gas of a combustion engine. It provides both a device and a method for improving the catalytic conversion of these substances.

According to one embodiment, the present invention provides a device for the catalytic conversion of harmful substances contained in the exhaust gas of an internal combustion engine. The device comprises a catalyst-carrying porous support, wherein said catalyst-carrying porous support has a first surface and a second surface, and wherein said first surface permits the entry of exhaust gas and said second surface permits the exit of said exhaust gas. Preferably, the first surface and the second surface are located on opposite sides of said substrate.

The catalyst-carrying porous support may be comprised of and/or coated with a catalyst material. Alternatively, bound to the first surface may be a first catalyst layer and/or bound to the second surface may be a second catalyst layer. Wherever a catalyst layer is applied, it is applied such that it does not prevent the exhaust from flowing from the first surface to the second surface.

According to a second embodiment, the present invention provides a method for the catalytic conversion of pollutants contained in an exhaust gas of an internal combustion engine, said method comprising contacting an exhaust gas with a catalyst, wherein the catalyst comprises a catalyst-carrying porous support with an open pore structure, wherein said support has a first surface and a second surface, and wherein the exhaust gas enters the support through said first surface, passes through the support, and leaves through said second surface.

### Brief Description of the Figures

Figure 1 is an enlarged cutaway illustration of the schematic structure and operation of a prior art catalyst system.
Figure 2 is an enlarged cutaway illustration of the principal structure and operation of the device according to the present invention.
Figure 3 is a schematic drawing of a catalyst-carrying support in the form of a wall-flow filter for the removal of gaseous harmful substances from the exhaust gas of combustion engines.
Figure 3b is a representation of a wall-flow filter according to Figure 3a with the downstream side plugs of the incident flow channels cut away.
Figure 4 is a representation of a diesel-light-off-test with a diesel oxidation catalyst with a wall-flow-filter closed on the downstream side according to Figure 3a. (Light-off-test with 270 ppm C₃H₆(C₁))
Figure 5 is a representation of a diesel-light-off-test with a diesel oxidation catalyst with a wall-flow-filter open on the downstream side according to Figure 3b. (Light-off-test with 270 ppm C₃H₆(C₁))

### Detailed Description

The present invention provides a device and a method for the catalytic conversion of pollutants contained in the exhaust gas of an internal combustion engine. According to the present invention, an exhaust gas is contacted with a catalyst, wherein the catalyst comprises a catalyst-carrying porous support with an open pore structure bounded by a first surface and a second surface and the exhaust gas is forced to enter into the support by said first surface, pass through the porous structure of the support and leave the catalyst via said second surface.

The present disclosure is not intended to be a treatise on catalyst conversion of gaseous pollutants. Readers are referred to appropriate available texts for background on this subject.

According to the present invention, high catalytic conversion is achieved by forcing exhaust gas to pass through the porous catalytically active material of the catalyst. This action increases the contact probability of the pollutants with the catalytic centers, which in turn exposes the catalytic centers of the catalytic material directly to the exhaust gas stream. Contrary to the prior art in the method according to the present invention, contact of the exhaust gas stream with the catalytic centers is enhanced. As the exhaust gas passes through the catalyst, the entire catalytic material is directly exposed to the exhaust gas stream.

In one embodiment, the present invention provides a device that may be used to facilitate the directional motion an exhaust gas to a catalyst. The device comprises a catalyst-carrying porous support that has a first surface and a second surface. The first surface and the second surface are on different sides of the support and are preferably located on opposite sides of the support.

The support is preferably located within an exhaust system in the direct path of the exhaust gas and oriented such that the first surface is upstream of the second surface. The phrase "exhaust system" refers to any structure through which an exhaust gas will flow during emission from an engine, for example, an exhaust pipe. Because the device is located in the direct path of the exhaust stream and is porous, the exhaust gas will enter through the first surface and exit out of the second surface. Preferably, the device spans most or all of a cross-section of an exhaust pipe, thereby forcing a part or all of the exhaust gas to pass through it. For example, it may be oriented perpendicularly to the length of an exhaust pipe and span the entire cross-section of the exhaust gas pipe.

The support may itself be made of a catalytic material. Alternatively, the support may be coated with a catalytic material such that the coating forms catalytic centers in the pores of the support at which the exhaust gas can be converted into less noxious compounds, while continuing to travel through the support.

In a preferred embodiment of the present invention, the porous support is in the form of a wall-flow-filter. This filter can be manufactured entirely from catalytic material or from an inert material and coated thereafter with a catalytic coating.

Alternatively, or in addition to forming the support out of a catalytic material or coating the support with a catalytic material, one may attach a catalyst layer to the first surface and/or the second surface. When a catalyst layer is attached to the first surface and/or the second surface, it must be sufficiently porous that the exhaust gas may travel through it.

The device according to the present invention is suitable for combustion engines in stationary combustion plants, as well as for combustion engines in mobile vehicles. Depending on the type of the combustion engine, diesel or gasoline engine, the catalyst can, for example, be a hydrogen-adsorber (HC-Adsorber), a NOₓ-storage catalyst, a diesel oxidation catalyst, an SCR catalyst, a HC-DeNOₓ catalyst or a three-way catalyst.

In a second embodiment, the present invention provides a method for cleaning the exhaust gas of a diesel engine or a gasoline lean burn direct injection engine. Preferably, the porous support is in the form of a wall-flow filter with a catalytic material consisting of a NOₓ-storage catalyst, an SCR catalyst or a HC-DeNOₓ catalyst for the reduction of nitrogen oxides in the exhaust gas of said engines.

According to this method, the pollutants are transported to the catalytically active centers of the catalyst by a directional motion due to the force of the exhaust gas as it leaves the engine and travels through the exhaust pipes, and not by diffusion. Thus, the limitation of the catalytic conversion of the harmful substances due to transport effects of the substances is mostly avoided.

In this embodiment, exhaust gas is forced to enter a porous support through a first surface and to exit the material through a second surface. The support is located in the flow stream; consequently, the exhaust gas does not need to change direction solely for the purpose of being exposed to the catalyst.

Either the support itself, or associated with the support, is a catalytic material. This material may, as described above, form a layer on the first surface and/or the second surface. Additionally or alternatively, it may form a coating on the pores of the substrate itself or be the substrate itself.

In another embodiment of the present invention, the method is used to clean the exhaust gas of a stoichiometrically operated gasoline engine, and the porous support is in the form of a wall-flow filter with a catalytic coating consisting of a three-way catalyst for the simultaneous conversion of nitrogen oxides, hydrocarbons and carbon monoxide contained in the exhaust gas of said engine.

The present invention may be more fully understood by reference to the figures.

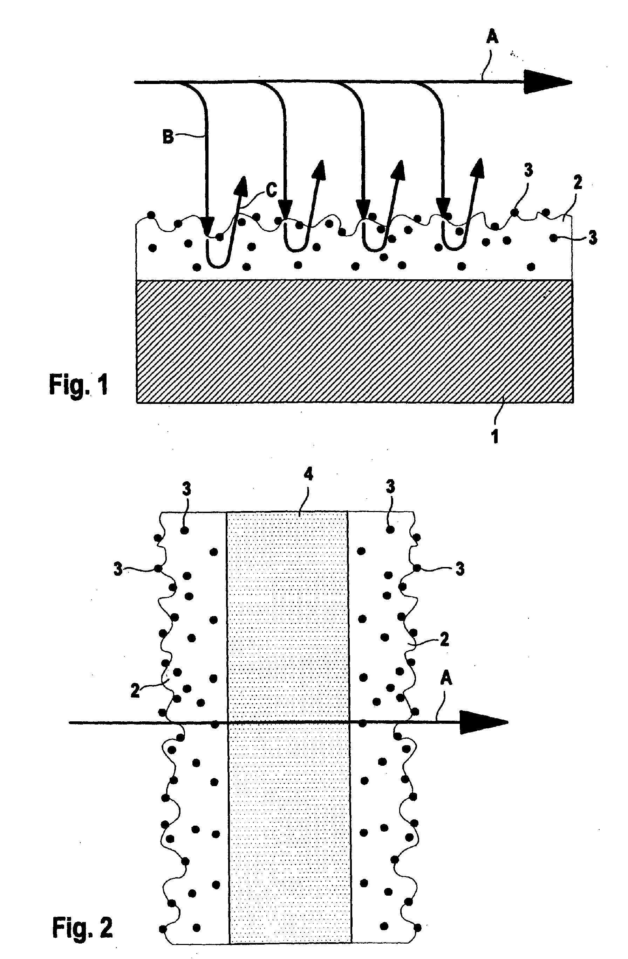

Figure 1 is an enlarged cutaway illustration of the schematic structure and operation of a known catalyst system for the conversion of pollutants in the exhaust gas of combustion engines. The porous support, 1, is formed, for example, by the walls of the flow channels of a flow-through type honeycomb support. On the surface of the catalyst support, 1, a porous catalyst layer, 2, is applied. This catalyst layer, the so-called wash coat, contains catalytic centers, 3, that are located on the surface, as well as in the volume of the catalyst layer, 2.

The catalyst layer, 2, is exposed to the exhaust gas that flows parallel to the surface of the catalyst layer. The flow direction of the exhaust gas stream is indicated with A.

In order to contact the catalytic centers, 3, the harmful substances of the exhaust gas need to diffuse into the catalyst layer and to the catalytic centers. The main direction of this diffusion motion is directed transverse to the flow direction of the exhaust gas in the flow channel. In figure 1, the directions of the diffusion motion are shown schematically and identified by B and C. Figure 1 shows that the exhaust gas needs to enter the catalyst layer, 2, in the direction indicated with B in order to reach the catalyst centers, 3, in the interior of the catalyst layer, 2. The reaction products of the catalytic conversion need to diffuse back to the surface of the catalyst layer, 2, along the direction indicated with C. Depending on the temperature of the exhaust gas and catalyst and on the porosity of the catalyst layer, the transport of the pollutants to the catalytic centers, 3, might be slow and limit the achievable conversion rate for the pollutants.

Figure 2 shows an enlarged cutaway illustration of the principal structure and operation of the device according to the present invention for the catalytic conversion of gaseous harmful substances in the exhaust gas of combustion engines. The device comprises a porous support, 4. On each of the essentially flat first (front) and second (back) surfaces of the porous support, 4, a catalyst layer, 2, is applied. This catalyst layer is similar to the catalyst layer of figure 1.

However, contrary to the assembly according to figure 1, the exhaust gas does not flow parallel to the surface of the catalyst layer but is forced to traverse the catalyst layers and the porous support, 4. The exhaust gas enters the catalyst layer, 2 on the (first surface) front side of the porous support, 4, passes the support and exits this configuration via the catalyst layer on the (second surface) back side of the porous support, 4.

The flow direction A of the exhaust gas as shown in figure 2 ensures that both catalyst layers, 2, and thus the catalytic centers, 3 contained therein, are exposed directly to the full exhaust gas stream. The directional flow A of the exhaust gas through the catalyst layers replaces the undirected diffusion motion of the exhaust gas in the prior art method according to figure 1 that always requires a certain activation energy to take place. In the method according to the present invention, the chemical conversion of the pollutants at the catalytic centers, 3, is no longer transport limited.

Alternatively to the assembly according to figure 2, the porous support can be manufactured entirely from catalytic material. In that case, no distinct catalyst coatings on the surfaces of the support, 4, are necessary.

Dependent on the type of combustion engine and on the harmful substances in the exhaust gas of the combustion engine, different catalytic materials can be used.

For the treatment of the exhaust gas of diesel engines and of gasoline lean burn direct injection engines, a NOₓ-storage catalyst can be used for converting the nitrogen oxides into harmless substances. Alternatively, it is also possible to coat the porous support with an SCR-catalyst and to convert the nitrogen oxides by combining the present invention with the method of selective catalytic reduction. Suitable SCR catalytic materials are made, for example, of a mixture of V₂O₂, WO₃ and TiO₃. To perform selective catalytic reduction ammonia or a precursor component that can be converted into ammonia needs to be added to the exhaust gas stream as a reducing agent.

For the removal of harmful substances from the exhaust gas of stoichiometrically operated gasoline engines, three-way-catalysts can be used. By means of these catalysts, the simultaneous reduction of nitrogen oxides, as well as the oxidation of hydrocarbons and carbon monoxide is achieved.

For the removal of harmful substances from the exhaust gas of diesel engines, diesel oxidation catalysts can be used. By means of these catalysts, the oxidation of CO and HC, as well as of soluble, organic components adhered to soot particles in the exhaust gas of diesel engines is achieved.

Finally, HC-DeNOₓ catalysts for the reduction of nitrogen oxides can be used for the treatment of the exhaust gas of diesel engines.

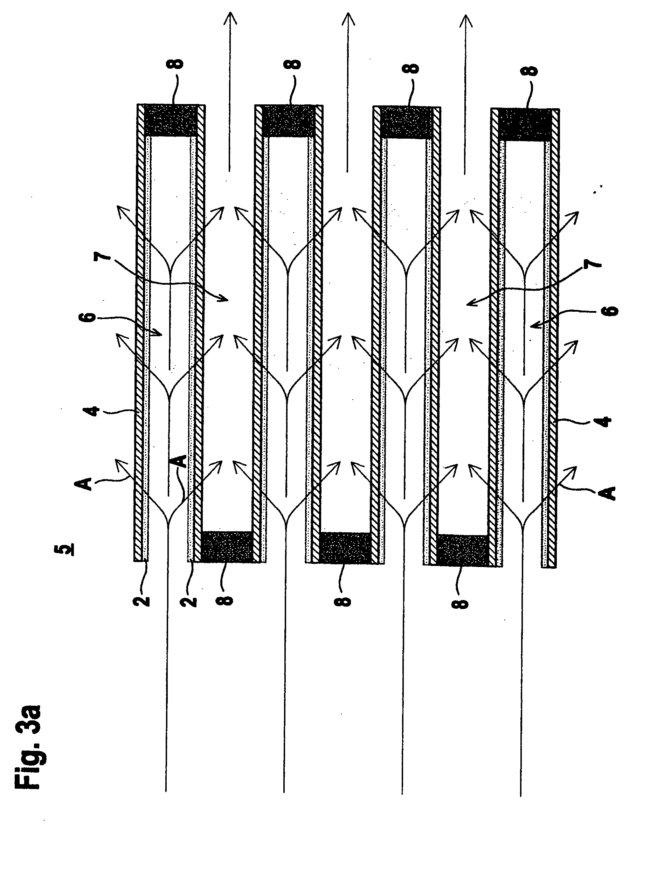

Figure 3a shows a preferred embodiment of the device according to the present invention for the conversion of gaseous pollutants in the exhaust gas of combustion engines. The device is essentially made of a wall-flow-filter, 5.

The wall-flow-filter, 5, has an alternating arrangement of entrance flow channels, 6, and exit flow channels, 7. The entrance flow channels, 6, and the exit flow channels, 7 are separated by wall elements that form the porous support, 4.

The inner surfaces of the entrance flow channels, 6, are coated with catalyst layers, 2. The entrance flow channels, 6, are closed by plugs, 8, on the downstream side. The exit flow channels, 7, are closed by similar plugs, 8, on the upstream side of the wall-flow-filter.

Therefore, the exhaust gas enters the wall-flow-filter, 5, via the entrance flow channels, 6, but cannot exit on the channels' downstream side. Thus, the exhaust gas is forced to traverse the separating walls and catalyst layers, 2, between two adjacent entrance and exit flow channels and then leaves the wall-flow-filter, 5, via the open downstream ends of the exit flow channels.

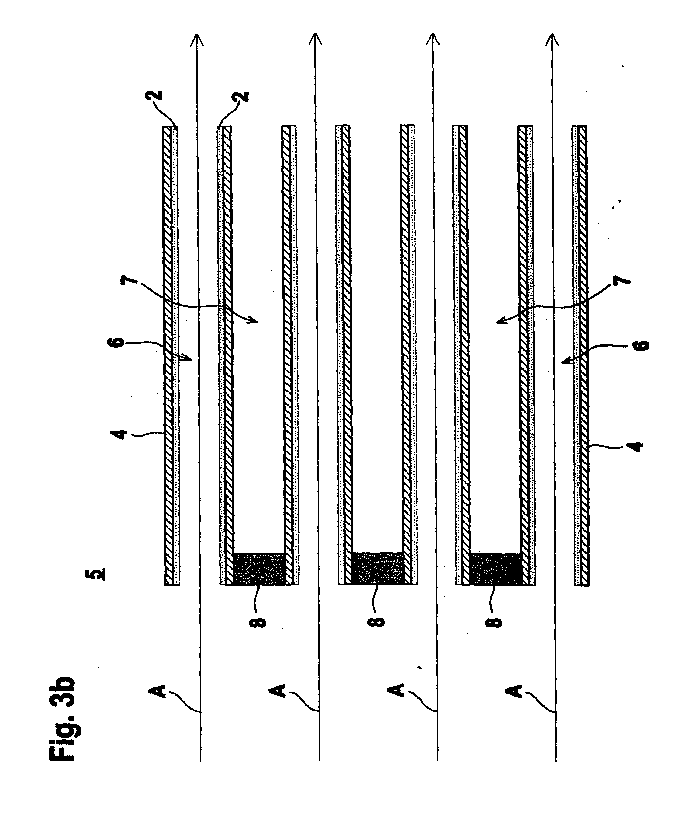

Figure 3b shows a wall-flow-filter, 5, that was used for comparison purposes. Contrary to the filter according to figure 3a, the plugs, 8, on the downstream side are removed in the wall-flow-filter according to figure 3b. Thus, the exhaust gas can flow through the entrance flow channels, 6, of the wall-flow-filter, 5, without being forced to pass the separating walls and enter the exit flow channels.

The following example is intended to explain further the method according to the present invention. The catalyst arrangements of figures 3a and 3b were used to compare the method of the present invention with the prior art method of cleaning the exhaust gas.

### Example 1:

A wall flow filter according to figure 3a made from silicon carbide (SiC) with a cell density of 31 cm⁻² (200 cpsi; cells per square inch) and a length of 15.24 cm (6 inches) and 2.54 cm (1 inch) in diameter was coated with a conventional diesel oxidation catalyst on the basis of platinum on alumina.

Coating was done from the entrance side of the wall flow filter. The achieved loading of the filter with the catalyst material was 44 g per liter of filter volume and the noble metal concentration was 0.46 g/l (13 g/ft³).

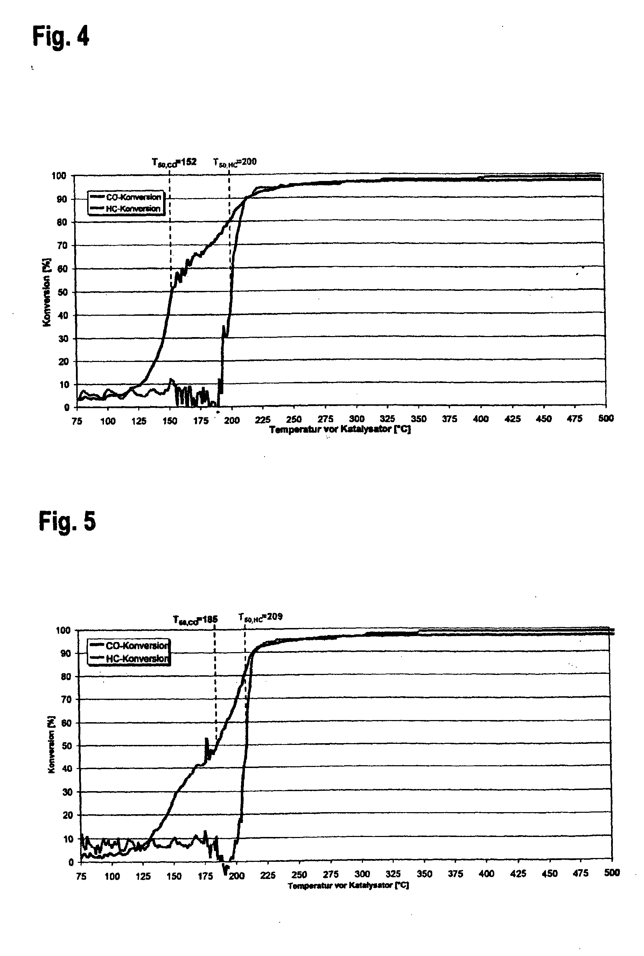

The light-off behavior for HC and CO of this catalyst was determined by means of a model gas test bench at a space velocity of 25,000 h⁻¹. The results are shown in figure 4. For CO and for HC light-off temperatures of 152 °C and 200 °C were measured.

After these measurements, 3 mm in length of the wall-flow-filter were cut off on the downstream side so that the plugs of the exit flow channels 7 of the wall-flow-filter were removed and the exhaust gas could now pass freely through the entrance flow channels without being forced to pass the walls between adjacent entrance and exit channels. This situation is shown in figure 3b.

Again the CO and HC light-off temperatures of the catalyst were determined. The resulting temperature for CO was 185 °C and for HC was 209 °C. The results are shown in figure 5.

These latter light-off temperatures are clearly higher than those obtained with the arrangement according to figure 3a. These results illustrate the improvements in exhaust gas cleaning in the method according to the invention.

Having thus described and exemplified the invention with a certain degree of particularity, it should be appreciated that the claims that follow are not to be so limited but are to be afforded a scope commensurate with the wording of each element of the claims and equivalents thereof.

## Claims

1. A method for the catalytic conversion of pollutants contained in an exhaust gas of an internal combustion engine, said method comprising contacting an exhaust gas with a catalyst, wherein the catalyst comprises a catalyst-carrying porous support with an open pore structure, wherein said support has a first surface and a second surface, and wherein the exhaust gas enters the support through said first surface, passes through the support, and leaves the catalyst through the said second surface.

2. The method according to claim 1, wherein at least one catalytic layer is present on said first surface and/or said second surface.

3. The method according to claim 2, wherein the support comprises a wall-flow-filter manufactured from an inert ceramic material.

4. The method according to claim 1, wherein the support comprises a wall-flow filter manufactured by extrusion of a catalytic material.

5. The method according to claim 3, wherein the internal combustion engine is a diesel engine or a lean burn direct injection engine and the catalyst is a NOₓ-storage catalyst, an SCR catalyst or a HC-DeNOₓ catalyst for the reduction of nitrogen oxides.

6. The method according to claim 4, wherein the internal combustion engine is a diesel engine or a lean burn direct injection engine and the catalyst is a NOₓ-storage catalyst, an SCR catalyst or a HC-DeNOₓ catalyst for the reduction of nitrogen oxides.

7. The method according to claim 3, wherein the internal combustion engine is a diesel engine and the catalyst is a diesel oxidation catalyst for the oxidation of carbon monoxide and hydrocarbons, as well as soluble organic compounds adhered to soot particles.

8. The method according to claim 4, wherein the internal combustion engine is a diesel engine and the catalyst is a diesel oxidation catalyst for the oxidation of carbon monoxide and hydrocarbons, as well as soluble organic compounds adhered to soot particles.

9. The method according to claim 3, wherein the internal combustion engine is a stoichiometrically operated gasoline engine and the catalyst is a three-way catalyst for simultaneous conversion of nitrogen oxides, hydrocarbons and carbon monoxide.

10. The method according to claim 4, wherein the internal combustion engine is a stoichiometrically operated gasoline engine and the catalyst is a three-way catalyst for simultaneous conversion of nitrogen oxides, hydrocarbons and carbon monoxide.

11. A device for the catalytic conversion of harmful substances in an exhaust gas of an internal combustion engine, wherein the device comprises a catalyst-carrying porous support with an open pore structure, and wherein said open pore structure has a first surface that permits the entry of the exhaust gas and a second surface that permits the exit of the exhaust gas.

12. The device according to claim 11, wherein said catalyst-carrying porous support comprising a catalytic material.

13. The device according to claim 12, wherein the catalytic material is a HC-absorber, a NOₓ-storage catalyst, a diesel oxidation catalyst, an SCR catalyst, a HC-DeNOₓ catalyst or a three-way catalyst.

14. The device according to claim 13, wherein the porous support is in the form of a wall-flow filter.

15. The device according to claim 11, wherein a catalyst layer is attached to said first surface and/or said second surface.

16. The device of claim 11, wherein said support comprises an inert ceramic material.

17. An exhaust system comprising the device of claim 11, wherein the device is located within an exhaust gas pipe and said first surface is oriented upstream of said second surface.

18. The exhaust system of claim 17, wherein said device spans a cross-section of said exhaust gas pipe.
